# EUROPEAN PATENT SPECIFICATION

(11) **EP 2 289 791 B1**
(45) Date of publication and mention of the grant of the patent: **05.03.2014**
(21) Application number: 10174691.5
(22) Date of filing: 31.08.2010
(51) Int. Cl.: B62M 7/04, B62M 17/00

(54) **Motorcycle**
Motorrad
Motocyclette

(30) Priority: 31.08.2009 JP 2009200318
(43) Date of publication of application: 02.03.2011
(73) Proprietor: Yamaha Hatsudoki Kabushiki Kaisha, Shizuoka-ken 438-8501 (JP)
(72) Inventor: Suzuki, Tomomi, Shizuoka-ken 438-8501 (JP); Suzuki, Hiroyuki, Shizuoka-ken 438-8501 (JP)
(74) Representative: Zimmermann, Tankred Klaus

(56) References cited:
- EP-A1- 1 361 149
- GB-A- 393 947
- JP-A- 2008 087 585
- US-A- 4 436 173

## Description

### BACKGROUND OF THE INVENTION

### Field of the Invention

The present invention relates to motorcycles, and more specifically to a shaft drive motorcycle.

### Description of the Background Art

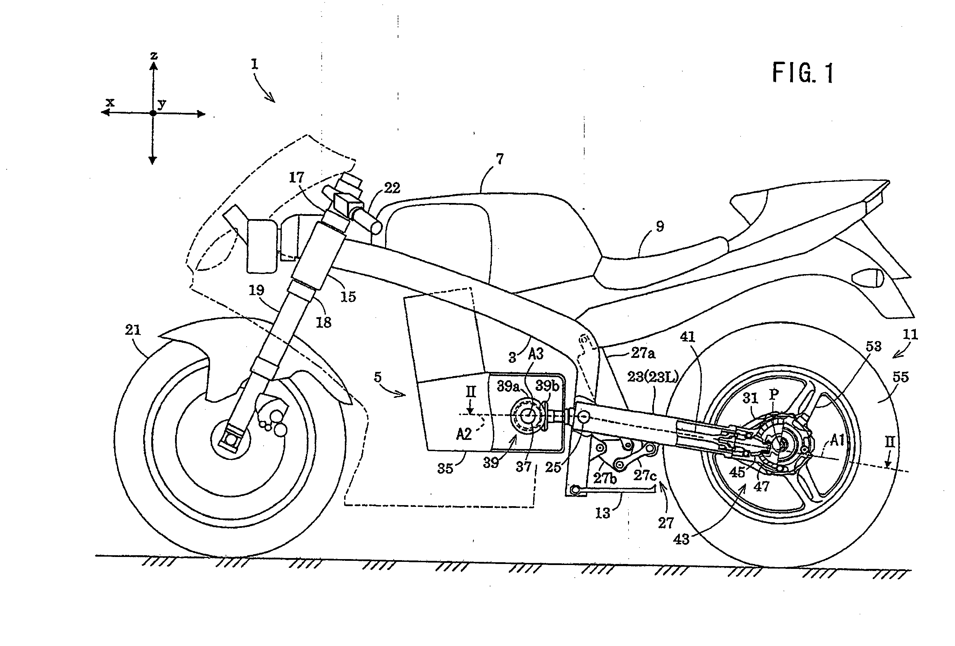

JP 09-72927 A discloses a motorcycle that employs a shaft drive power transmission mechanism for secondary transmission of power from a transmission to a rear wheel (see paragraphs 0008 to 0015 and Figs. 1 to 5). The motorcycle includes a rear fork, a drive shaft, a gear case, and a rear bevel gear. The left part of the rear fork also serves as a tubular casing used to store a part of the drive shaft. The rear end of the rear fork is connected to the gear case. The gear case stores the rear bevel gear. The rear bevel gear includes a first rear gear incorporated at the rear end of the drive shaft and a second rear gear provided rotatably in the gear case. The drive shaft is coupled to the hub of the rear wheel through the rear bevel gear. The second rear gear has a relatively thin disk shape. The second rear gear is coaxial with the axle shaft of the rear wheel and arranged to rotate together with the rear wheel.

JP 2008-87585 A discloses a motorcycle in which the power of an output shaft included in an engine unit provided at a vehicle body frame is transmitted to the rear wheel side through a rear wheel drive shaft (see paragraphs 0014 to 0027 and Figs. 1 to 5). The motorcycle includes a rear wheel suspension device, a rear wheel drive shaft, a bevel gear mechanism, and a hypoid gear. The rear wheel suspension device includes an upper arm member, a lower arm member, a knuckle member, and a rear cushion unit. A rear wheel support provided on the left side of the rear wheel in the knuckle member is provided as a gear housing. The rear drive shaft includes four shaft members. The front end of a first shaft member is coupled to the output shaft of the engine through the bevel gear mechanism. The front end of a second shaft member is coupled to the rear end of the first shaft member through a first universal joint. A Neithard mechanism is provided between the second shaft member and a third shaft member. The front end of a fourth shaft member is coupled to the rear end of the third shaft member through a second universal joint. The fourth shaft member is entered into the rear wheel support so that the axial line of the fourth shaft member passes a position offset from the rotation axial line of the rear wheel. The axial line of the fourth shaft member is offset to the upper side from the rotation axial line of the rear wheel. The hypoid gear includes a transmission gear and a ring gear. The ring gear is stored in the rear wheel support and fixed coaxially with the rear wheel. The transmission gear is fixed to the rear end of the fourth shaft member and engaged with the rear gear.

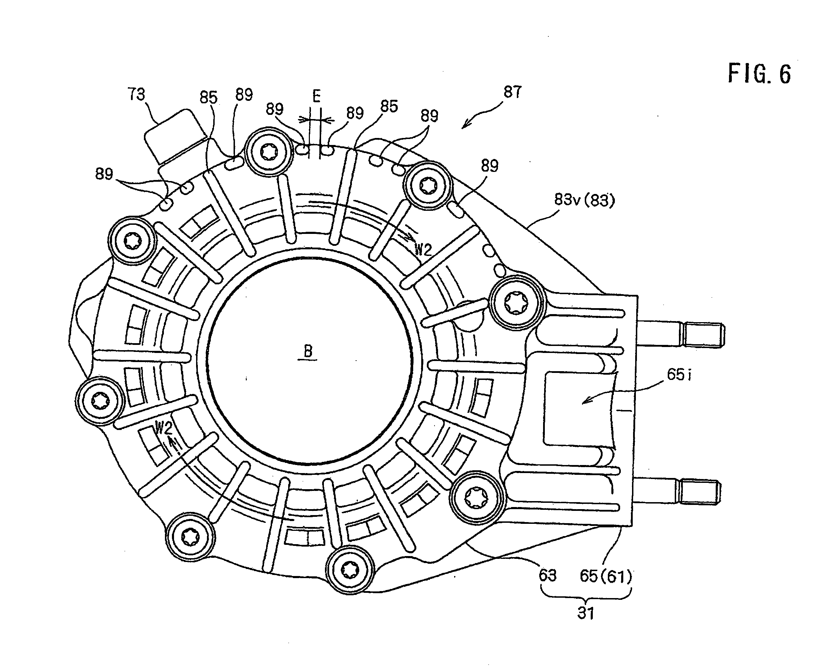

JP 2008-87585 A discloses a motorcycle in a different form from the above-disclosed motorcycle (see paragraphs 0037 to 0038 and Fig. 6). In the motorcycle, the first shaft member is coupled to the output shaft of an engine unit through a hypoid gear mechanism. The axial line of the fourth shaft member is provided as it is offset to the lower side from the rotation axial line of the rear wheel.

EP 1 361 149 A1 describes a rear suspension for a motorcycle according to the preamble of claim 1 with cardan shaft transmission of the type having a suspension arm articulated between the frame of the motorcycle and the hub of the rear wheel. Cardan shaft transmission has cardan joint ends that transmit the torque to the wheel and form an articulated quadrilateral mechanism with the suspension arm. The other two sides of the quadrilateral are located on the frame and on the hub.

GB 393,947 A describes a motor-cycle having its power unit centrally-disposed in the vehicle frame with a crank shaft crossing the centre line of the vehicle and connected by a direct drive to the driving wheel through a gear-box and a connecting shaft having flexible couplings.

### SUMMARY

It is an object of the present invention to provide a motorcycle that can restrain increase in transmission loss while reducing the size of the gear housing.

This object is achieved by a motorcycle of claim 1.

In the motorcycle disclosed by JP 09-72927 A, the second rear gear has a large diameter and the gear case has an increased size. On the other hand, the hypoid gear disclosed by JP 2008-87585 includes a ring gear with a small diameter and quietness in operation, but sliding is generated in engagement between the gears, which should generate power transmission loss.

The inventors have studied the possibility of reducing the size of the gear housing by employing a hypoid gear unit in which the rotation axis of the pinion gear is offset downward from the rotation center of the ring gear. In the hypoid gear disclosed by JP 2008-87585 A, the rotation axis of a transmission gear (pinion gear) is offset downward from the rotation center of the ring gear. However, as described above, the gear housing makes parallel translation in the vertical direction in the same position (inclination), and therefore the amount of lubricant oil must be increased in consideration of lubrication of the pinion gear. With the increased lubricant oil, the stirring loss of the lubricant oil by the ring gear increases, which increases power transmission loss by the hypoid gear. The inventors have found that in consideration of the power transmission loss caused by the sliding in the engagement of the gears, the hypoid gear disclosed by JP 2008-87585 causes large power transmission loss. On the hand, the inventors have found that the temperature of the gear housing is raised when the size of the gear housing is reduced in the hypoid gear disclosed by JP 2008-87585 A. The inventors have also found that the increase in the temperature of the gear housing is also attributable to increase in the temperature of the lubricant oil. The inventors have then found that the temperature of the lubricant oil is raised because the gears slide much, which tends to increase the oil temperature more easily than the bevel gear and in addition that the amount of heat dissipation is reduced when the gear housing is reduced in size.

A motorcycle according to a preferred embodiment of the present invention includes a vehicle body frame, an engine, a swing arm, a rear wheel, a drive shaft, a gear housing, a pinion gear, and a ring gear. The vehicle body frame has a pivot shaft. The engine is supported at the vehicle body frame. The swing arm is provided swingably around the pivot shaft. The rear wheel is provided rotatably with the swing arm. The first drive shaft is provided to swing together with the swing arm to drive the rear wheel. The gear housing is provided integrally with the swing arm to swing around the pivot shaft together with the swing arm. The pinion gear is stored in the gear housing and coupled coaxially with the rear end of the first drive shaft. The ring gear is stored in the gear housing, coupled coaxially with the axle shaft of the rear wheel, and engaged with the pinion gear. The rotation axis of the pinion gear is offset downward from the rotation center of the ring gear.

Since a hypoid gear is employed according to the preferred embodiment of the invention, in which the rotation axis of the pinion gear is offset downward from the rotation center of the ring gear, the gear housing has a reduced size. In addition, the gear housing is provided integrally with the swing arm and swings together with the swing arm around the pivot shaft, so that even if the amount of the lubricant oil in the gear housing is small, the lubricant oil is supplied sufficiently to the pinion gear and the ring gear. Consequently, according to the present invention, increase in the transmission loss can be restrained while the gear housing is reduced in size.

Other features, elements, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a left side view of a general structure of a motorcycle according to a preferred embodiment of the present invention.
Fig. 2 is a sectional view taken along line II-II in Fig. 1.
Fig. 3 is a perspective view of an upper portion and a front side portion of a gear housing in Fig. 1.
Fig. 4 is a left side view of the gear housing shown in Fig. 3.
Fig. 5 is a perspective view of a rear side portion and a lower portion of the gear housing shown in Fig. 3.
Fig. 6 is a left side view of the gear housing shown in Fig. 3.
Fig. 7 is a sectional view taken along line VII-VII in Fig. 4.
Fig. 8 is a right side view of an outside case shown in Fig. 3.
Fig. 9 is a sectional view taken along line IX-IX in Fig. 8.
Fig. 10 is a sectional view taken along line X-X in Fig. 8.
Fig. 11A is a sectional view of the gear housing when the motorcycle shown in Fig. 1 is lifted upright without using a center stand and the front wheel and the rear wheel are in contact with the ground surface.
Fig. 11B is a sectional view of the gear housing when the motorcycle shown in Fig. 1 is lifted with using the center stand and the rear wheel is lifted off from the ground surface.
Fig. 12 is a perspective view of a rear side portion and a lower portion of a gear housing according to another preferred embodiment of the present invention.
Fig. 13 is a perspective view of a rear side portion and a lower portion of a gear housing according to yet another preferred embodiment of the present invention.
Fig. 14A is a sectional view of the gear housing in which a ball bearing and a needle bearing entirely emerge from lubricant oil when the front wheel and the rear wheel of the motorcycle shown in Fig. 1 are in contact with the ground surface.
Fig. 14B is a sectional view of the gear housing in which the ball bearing and the needle bearing are partly immersed in the lubricant oil when the gear housing swings to a position above the position of the gear housing when the front wheel and the rear wheel of the motorcycle shown in Fig. 1 are in contact with the ground surface.

### DETAILED DESCRIPTION OF THE PREFERRED EMBODIMENTS

A preferred embodiment of the present invention will be described in detail in conjunction with the accompanying drawings in which the same or corresponding elements are designated by the same reference characters and their description will not be repeated.

### 1. General Structure of Motorcycle

In Fig. 1, the x-direction refers to the front-back direction of the vehicle body, the y-direction refers to the widthwise direction of the vehicle body, and the z-direction refers to the up-down direction of the vehicle body. The front-back direction, the widthwise direction, and the up-down direction of the vehicle body are orthogonal to one another. When the vehicle body is upright, the vehicle front-back and widthwise directions are both horizontal and the up-down direction is the vertical direction. Herein, the "front," "back," "right," and "left" refer to these directions seen from a rider seated on the motorcycle 1. Therefore, the left in Fig. 1 indicates the front of the motorcycle 1.

The motorcycle 1 includes a vehicle body frame 3. The vehicle body frame 3 includes an engine 5, a fuel tank 7, and a seat 9. The engine 5 is provided under the vehicle body frame 3. The fuel tank 7 is provided above the vehicle body frame 3 and closer to the front. The seat 9 is provided above the vehicle body frame 3 and closer to the back. A center stand 13 is provided rotatably under the vehicle body frame 3. When the center stand 13 is upright, the rear wheel 11 is lifted off from the ground surface.

A head pipe 15 is fixed to the rear end of the vehicle body frame 3. The head pipe 15 supports a steering shaft (not shown) around the axial center rotatably. A front fork 19 is coupled to the steering shaft through a handle crown 17 and an under bracket 18. A front wheel 21 is supported rotatably under the front fork 19. A handle 22 is coupled to the steering shaft through the handle crown 17.

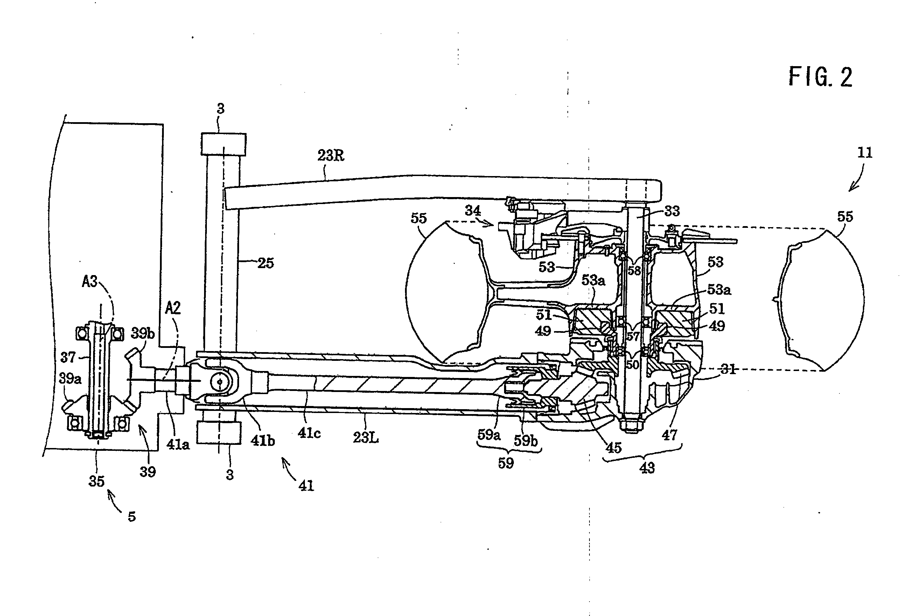

A swing arm 23 is supported at the rear end of the vehicle body frame 3 swingably around a pivot shaft 25. The swing arm 23 has a right swing arm 23R (see Fig. 2) that extends from the pivot shaft 25 to the right of the rear wheel 11 and a left swing arm 23L that extends from the pivot shaft 25 to the left of the rear wheel 11.

The swing arm 23 is coupled to the vehicle body frame 3 by a rear suspension mechanism 27. The rear suspension mechanism 27 is a so-called bottom link suspension and includes a shock absorber 27a and links 27b and 27c. The rear suspension mechanism 27 absorbs impact from the road surface.

The left swing arm 23L supports the gear housing 31. The gear housing 31 is fixed to the rear end of the left swing arm 23L and swings together with the left swing arm 23L around the pivot shaft 25.

Referring to Fig. 2, the gear housing 31 and the right swing arm 23R support the axle shaft 33 for the rear shaft 11. One end of the axle shaft 33 is coupled to the gear housing 31. The other end of the axle shaft 33 is coupled to the rear end of the right swing arm 23R. Therefore, the axle shaft 33 swings together with the swing arm 23.

The axle shaft 33 supports the single rear wheel 11 rotatably. The rear wheel 11 is provided only on the right side of the gear housing 31 and nothing is provided on the left side of the gear housing 31. The axle shaft 33 supports a disk brake unit 34 between the rear wheel 11 and the right swing arm 23R.

Referring to Figs. 1 and 2, the engine 5 includes a crankcase 35. The crankcase 35 includes a crankshaft, a transmission, and an output shaft 37. The output shaft 37 is provided at the rear portion of the crankcase 35 substantially parallel to the vehicle widthwise direction. The output shaft 37 rotates around its axial center by power generated by the engine 5.

A shaft drive mechanism 41 is coupled to the output shaft 37 through a middle gear unit 39. The middle gear unit 39 is a bevel gear unit and includes a driving bevel gear 39a and a driven bevel gear 39b. The driving bevel gear 39a is coupled coaxially with the output shaft 37. The driven bevel gear 39b is coupled to the front end of the shaft drive mechanism 41. The rotation shaft A2 of the driven bevel gear 39b is provided substantially at the same height as the rotation shaft A3 of the driving bevel gear 39a. Power is transmitted from the output shaft 37 to the shaft drive mechanism 41 through the middle gear unit 39 having the above-described structure.

The rear gear unit 43 is coupled to the rear end portion of the shaft drive mechanism 41. The rear gear unit 43 is stored in the gear housing 31. The rear gear unit 43 has a small diameter pinion gear 45 and a large diameter ring gear 47 that are engaged with each other.

As shown in Fig. 1, the rotation axis A1 of the pinion gear 45 is offset downward from the rotation center P of the ring gear 47. The pinion gear 45 is coupled to the rear end of the shaft drive mechanism 41.

Referring to Fig. 2, the ring gear 47 is coupled to a hub clutch member 49 by spline coupling at the outer portion of the gear housing 31. The hub clutch member 49 is held rotatably at the axle shaft 33 by a ball bearing 50 and rotates together with the ring gear 47. A rubber damper 51 is fixed to the hub clutch member 49.

The rear wheel 11 includes a cast wheel 53 and a tire 55. However, the rear wheel may include a spoke wheel. The cast wheel 53 is held rotatably at the axle shaft 33 by two ball bearings 57 and 58. The rubber damper 51 is pressed against the hub 53a of the cast wheel 53 and the rubber damper 51 is in surface-contact with the hub 53a. In this way, power is transmitted between the rubber damper 51 and the hub 53a while impact is absorbed. In this way, the ring gear 47 is coupled to the rear wheel 11 through the hub clutch member 49 and the rubber damper 51. Therefore, the ring gear 47 rotates together with the rear wheel 11.

When the shaft drive mechanism 41 rotates, the rear gear unit 43 (the pinion gear 5 and the ring gear 47) lowers the rotation speed of the shaft drive mechanism 41 while changing the rotation direction of the shaft drive mechanism 41 by about 90° and rotates the rear wheel. In this way, the motorcycle 1 advances.

### 2. Structure of Shaft Drive Mechanism 41

Referring to Fig. 2, the structure of the shaft drive mechanism 41 will be described. The shaft drive mechanism 41 includes a drive shaft 41a, a universal joint 41b, and a driveshaft 41c. The universal joint 41b is coupled between the drive shafts 41a and 41c. The universal joint 41b has inconstant velocity. The universal joint 41b allows the rotation axis of the drive shaft 41a and the rotation axis of the drive shaft 41c to be folded. The universal joint 41b has its rotation center arranged in a position on an extension of the pivot shaft 25.

The driven bevel gear 39b of the middle gear unit 39 is coupled coaxially with the front end of the drive shaft 41a. The drive shaft 41a is supported at the crankcase 35 rotatably by a bearing (not shown).

The drive shaft 41c is supported at the left swing arm 23L rotatably around the axial center of the drive shaft 41c by a bearing (not shown). The left swing arm 23L has a substantially cylindrical shape. The drive shaft 41c is inserted in the left swing arm 23L. In this way, the drive shaft 41c can swing around the pivot shaft 25 together with the left swing arm 23L.

The rear end of the drive shaft 41c is coupled to the pinion gear 45 through a gear coupling 59. The gear coupling 59 includes an inner tube 59a having a spur gear (external gear) and an outer tube 59b having an internal gear to be engaged with the spur gear. The inner tube 59a is coupled coaxially with the rear end of the drive shaft 41c. The outer tube 59b is fixed to one end of the pinion gear 45. The gear coupling 59 absorbs shifts and the like between the rotation axis of the drive shaft 41c and the rotation axis A1 of the pinion gear 45 and smoothly transmits power from the drive shaft 41c to the pinion gear 45.

### 3. 1. Structure of Gear Housing 31 and Rear Gear Unit 43

In this description, a "front side portion" refers to a side opposite to the side of the rear wheel 11 between both sides in the vehicle widthwise direction y. A "rear side portion" refers to a side on the side of the rear wheel 11 between both sides in the vehicle widthwise direction y. According to the present preferred embodiment, the terms "front side portion" and the "rear side portion" are used to specify not only one side of the "gear housing 31" but also one side of a "tubular portion 65," a "disk shaped portion 67" or the like (that will be described) as required.

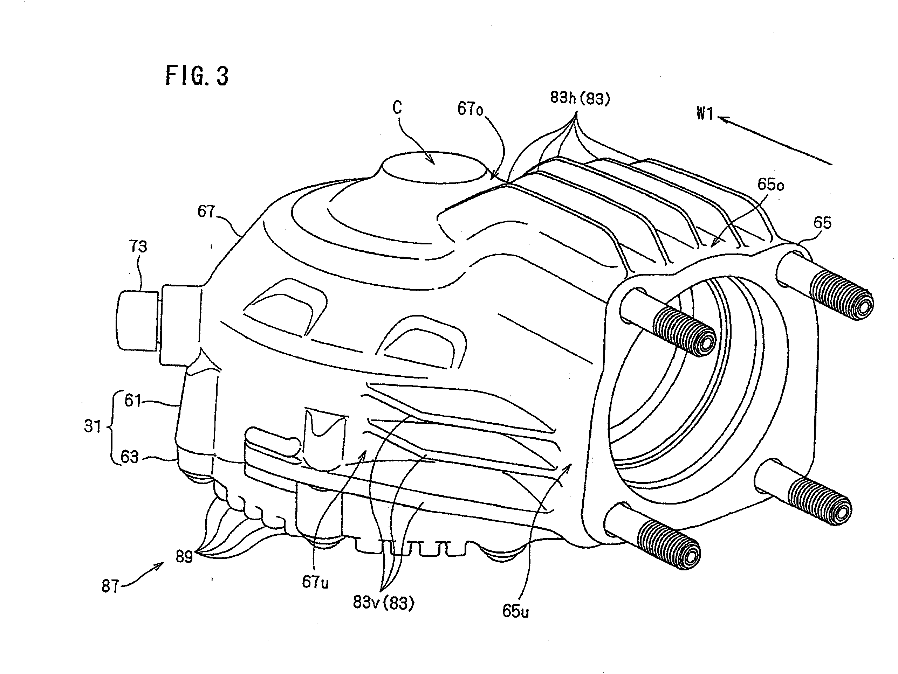

Referring to Figs. 3 to 6, the gear housing 31 includes an outside case 61 and an inside cover 63. The outside case 61 includes the tubular portion 65 that has a tubular shape (somewhat like a quadratic prism shape) and the disk shaped portion 67 having a disk shape (or bowl shape). The tubular portion 65 extends along substantially in the front-back direction x and has its rear end connected continuously to the disk shaped portion 67. The center of the disk shaped portion 67 is substantially in coincidence with the vehicle widthwise direction y and an opening C is formed substantially in the center of the front side portion 67o of the disk shaped portion 67, and the axle shaft 33 is held at the opening C. The inside cover 63 is coupled to the rear side portion of the disk shaped portion 67. The inside cover 63 is an annular, substantially flat plate shaped element having an opening B in the center.

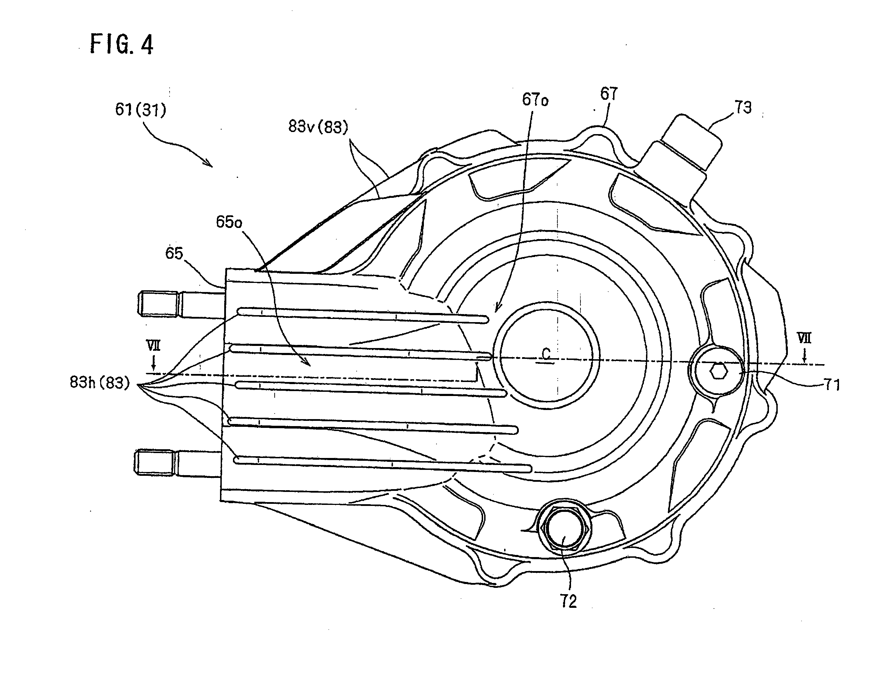

As shown in Fig. 4, the front side portion of the gear housing 31 is formed by the front side portion 65o of the tubular portion 65 and the front side portion 67o of the disk shaped portion 67. The front side portion 67o of the disk shaped portion 67 includes an injection portion 71 used to inject lubricant oil into the gear housing 31, a discharge portion 72 used to discharge lubricant oil in the gear housing 31, and a breather device 73 used to communicate the inside of the gear housing 31 with the atmosphere. As shown in Fig. 6, the rear side portion of the gear housing 31 includes the inside cover 63 and the rear side portion 65i of the tubular portion 65.

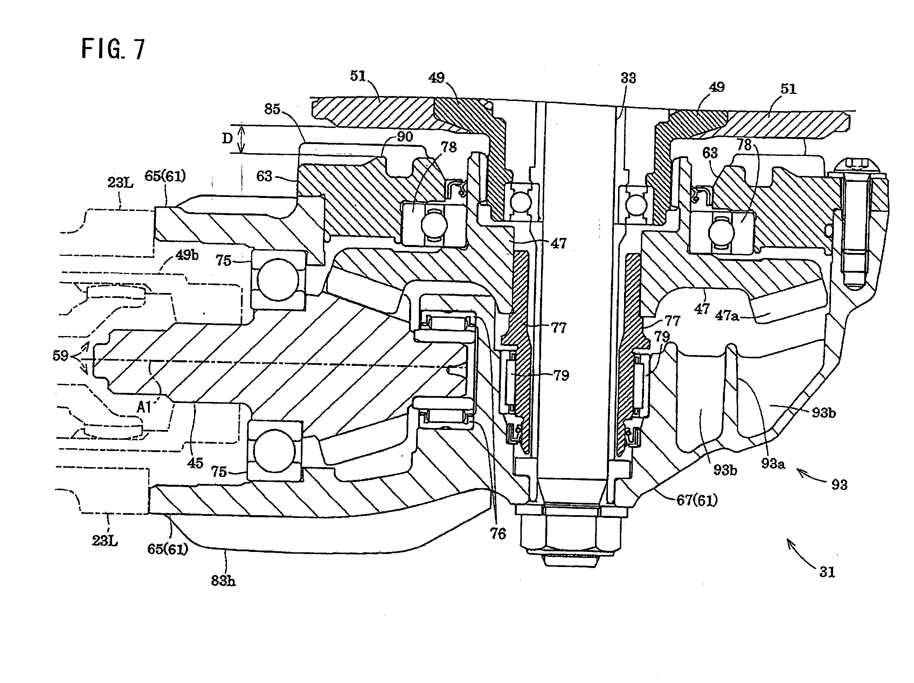

Referring to Fig. 7, the internal structure of the gear housing 31 will be described. The rear end of the left swing arm 23L is fixed to the front end of the tubular portion 65 and the axial center of the tubular portion 65 is arranged to substantially coincide with the rotation axis of the drive shaft 41c.

The pinion gear 45 is mainly provided in the tubular portion 65 so to have its rotation axis A1 arranged substantially parallel to the axial center of the tubular portion 65. The pinion gear 45 is held by the tubular portion 65 rotatably by a ball bearing 75 and a needle bearing 76. The ball bearing 75 and the needle bearing 76 are bearings for pinion gears.

The ring gear 47 is provided between the disk shaped portion 67 and the inside cover 63. A substantially cylindrical collar 77 is integrally fitted into the opening formed in the center of the ring gear 47. The inside cover 63 supports the ball bearing 78 that holds the ring gear 47 itself rotatablly. The disk shaped portion 67 (outside case 61) supports the needle bearing 79 that holds the collar 77 rotatably. The ring gear 47 is held rotatably at the gear housing 31 by the ball bearing 78 and the needle bearing 79.

The inside of the tubular portion 65 or the inside of the part where the tubular 65 continues to the disk shaped portion 67 corresponds to a position where the pinion gear 45 and the ring gear 47 are engaged with each other. Stated differently, at the part of the gear housing 31 on the side closer to the front in the front-back direction x, the pinion gear 45 and the ring gear 47 are engaged with each other.

The axle shaft 33 is inserted into the gear housing 31 through the opening B of the inside cover 63 and the opening of the ring gear 47. A small gap is secured between the axle shaft 33 and the ring gear 47.

### 3. 2. Structure of Fins in Gear Housing 31

Referring back to Figs. 3 and 4, an outer fin 83 is provided at the outer surface of the gear housing 31. The fin receives traveling wind and carries out heat exchange with the outside air while the motorcycle 1 travels. The outer fin 83 has horizontal fins 83h and vertical fins 83v Fig. 3 also shows the direction W1 of traveling wind.

The horizontal fin 83h projects substantially in the horizontal direction within the range from the front side portion 65o of the tubular portion 65 to the center of the front side portion 67o of the disk shaped portion 67. Each of the horizontal fins 83h is a flat plate element substantially parallel to the axial center of the tubular portion 65. Therefore, each of the horizontal fins 83h is substantially parallel to the rotation axis A1 of the pinion gear 45 and the front-back direction x.

As shown in Fig. 4, the horizontal fins 83h are arranged at intervals among one another in the vertical direction z entirely across the front side portion 65o of the tubular portion 65. When the gear housing 31 is viewed laterally, the range in which the horizontal fins 83h are arranged corresponds to the part where the pinion gear 45 and the ring gear 47 are engaged with each other. The horizontal fins 83h are integrally formed with the outside case 61.

The vertical fins 83v project substantially in the vertical direction from the upper portion 65u of the tubular portion 65 to the center of the upper portion 67u of the disk shaped portion 67. The vertical fins 83V are a plurality of (three) flat plate elements substantially parallel to the axial center of the tubular portion 65. Therefore, the vertical fins 83v are also substantially parallel to the rotation axis A1 of the pinion gear 45 and the front-back direction x.

The vertical fins 83v are arranged at intervals among one another in the vehicle widthwise direction y across the entire upper portion 65u of the tubular portion 65. When the gear housing 31 is viewed from the top, the range within which the vertical fins 83v are arranged corresponds to the part where the pinion gear 45 and the rig gear 47 are engaged with each other. The vertical fins 83v are also formed integrally with the outside case 61.

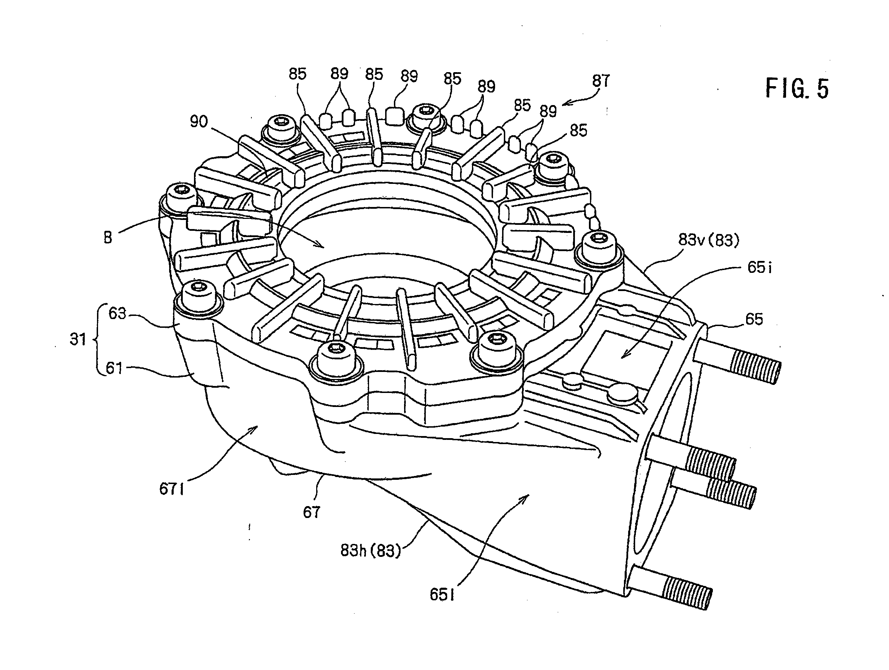

Referring to Figs. 5 and 6, the rear side portion of the gear housing 31 is further provided with the inner fins 85 used for heat exchange with the atmosphere through swirling flow generated by the rotation of the rear wheel 11. The swirling flow is air flow that swirls around the axle shaft 33. Fig. 6 shows the direction W2 of the swirling flow.

The inner fins 85 project from the inside cover 63. The inner fins 85 are arranged radially around the axle shaft 33. More specifically, the inner fins 85 are flat plate type elements that extend radially from the center of the axle shaft 33 and arranged at intervals in the circumferential direction. The inner fins 85 are formed in the range from the opening B of the inside cover 63 to the circumferential edge of the inside cover 63. The inner fins 85 are integrally formed with the inside cover 63.

An entry preventing member 87 is provided in an upper region of the inside cover 63. The entry preventing member 87 prevents foreign substances such as flying pebbles from entering between the inner fins 85. The entry preventing member 87 is formed by a plurality of claw pieces 89.

The claw pieces 89 are provided at intervals along the upper circumferential portion of the inside cover 63. The distance E between the claw pieces 89 is set to a size such as 5 mm that is slightly smaller than the size of a foreign substance such as a pebble that may not slip through the gap between the inside cover 63 and the opposing rubber damper 51 and remain there.

As shown in Figs. 5 and 7, the surface of the inside cover 63 also has an annular raised portion 90 provided across the inner fins 85 and having a projection height smaller than the inner fins 85. In a space partitioned by the annular raised portion 90 and a pair of inner fins 85 and open upward, foreign substances larger than the gaps formed by these elements and the opposed rubber damper 51 and could enter and be caught between the inner fins 85. More specifically, as shown in Fig. 7, a foreign substance larger than the distance D between the annular raised portion 90 and the rubber damper 51 is caught between the inside cover 63 and the rubber damper 51. Therefore, the distance E between the claw pieces 89 is preferably slightly smaller than the distance D between the annular raised portion 90 and the rubber damper 51.

The entry preventing member 87 having the above-described structure can prevent entry of foreign substances that could be caught between the inner fins 85 by the claw pieces 89 while the outside air can be passed through between the claw pieces 89. Foreign substances that can be passed through between the claw pieces 89 are limited to the ones with a smaller size than the minimum interval (distance) D between the inner fins 85. In this way, foreign substances are unlikely to be caught between the inner fins 85.

### 3. 3. Structure of Oil Sump 91 in Gear Housing 31

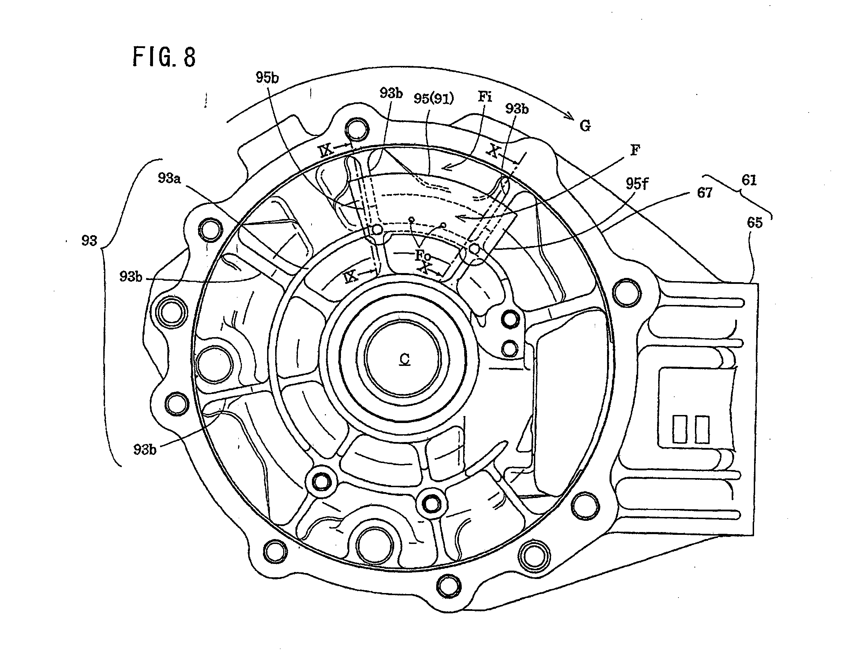

Referring to Figs. 8 to 10, an oil sump 91 used to temporarily store lubricant oil is provided in the gear housing 31. The oil sump 91 forms a temporary fountain F between itself and the inner wall of the gear housing 31. Now, the oil sump 91 and the temporary fountain F will be described.

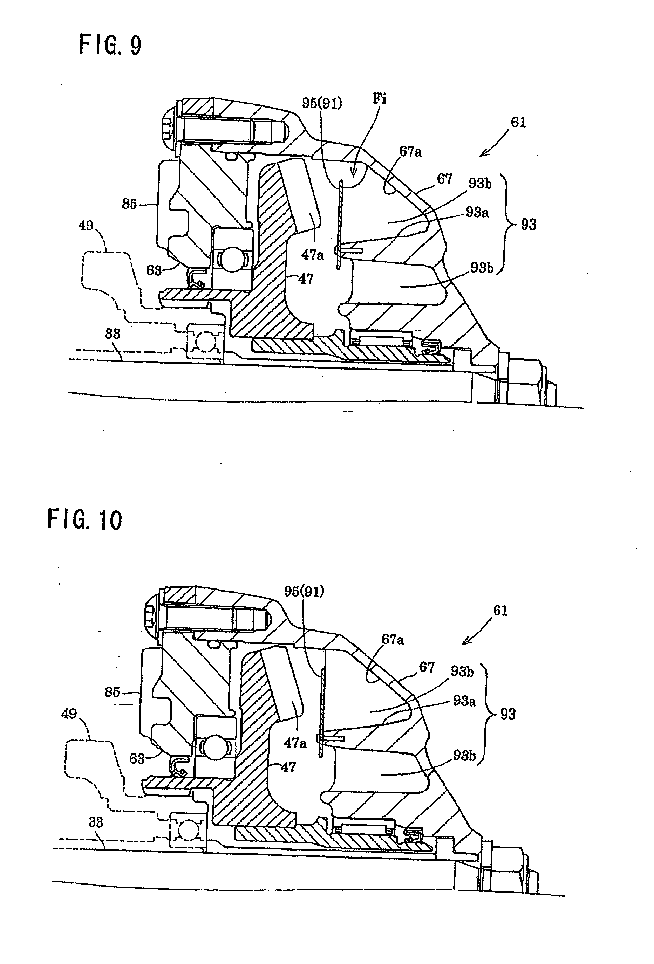

As shown in Figs. 9 and 10, a rib member 93 that protrudes from the inner back surface 67a of the disk shaped portion 67 to the ring gear 47 is provided. The rib member 93 is divided into an annular rib member 93a and a linear rib member 93b. The length of the protrusion of the annular rib member 93a is greater than the protrusion length of the linear rib member 93b. The annular rib member 93a and the linear rib member 93b are formed integrally with the disk shaped portion 67 (outside case 61).

As shown in Fig. 8, the annular rib member 93a has a substantially cylindrical shape removed of a part where the pinion gear 45 is provided. The linear rib member 93b has a flat plate shape that extends in the radial direction substantially around the axle shaft 33. The annular rib member 93a and the linear rib member 93b intersect each other in various positions.

The oil sump 91 is a flat plate element having a substantially sectorial shape and includes an upper side portion at the tip end of the annular rib member 93a and a side wall plate 95 abutted against two adjacent linear rib members 93b. The side wall plate 95 is fixed to the rib member 93 in a position where the annular rib member 93a and the linear rib member 93b interest. With respect to the rotation direction G of the ring gear 47, the rear end 95b of the side wall plate 95 is set in a position where the linear rib member 93b is not provided. With respect to the rotation direction G of the ring gear 47 the front end 95f of the side wall plate 95 is set in a position where the linear rib 93 is not provided.

In this way, the temporary fountain F having the annular rib member 93a as the bottom surface and surrounded by the inner back surface 67a of the disk shaped portion 67, the side wall plate 95 and the two linear rib members 93b is formed. The temporary fountain F is opposed to the upper side portion of the tooth surface of the ring gear 47. More specifically, the temporary fountain F is on the lateral side of the tooth surface 47a and close to the tooth surface 47 of the ring gear 47.

As shown in Fig. 8, the upper part of the side wall plate 95 surrounded by the two linear rib members 93b serves as an inlet Fi through which lubricant oil comes into the temporary fountain F. As shown in Fig. 9, the inlet Fi is cut at the upper part of the linear rib 93b on the upstream side with respect to the rotation direction G of the ring gear 47 among the two linear rib members 93b. The inlets Fi are positioned in the flow path of the lubricant oil taken around with the ring gear 47 and the lubricant oil is automatically allowed to flow into the inlets as the ring gear 47 rotates. On the other hand, as shown in Fig. 10, among the two linear rib members 93b, the linear rib 93b on the front side with respect to the rotation direction G of the ring gear 47 has no notch.

As shown in Fig. 8, small diameter outlets Fo that discharge lubricant oil from the temporary fountain F are formed under the side wall plate 95. The flow path area of the outlets Fo is smaller than the flow path area of the outlets Fi.

Since the temporary fountain F is always communicated with the inside of the gear housing 31 through the outlets Fo, the lubricant oil cannot be kept stored. However, the lubricant oil taken around with the ring gear 47 smoothly comes into the temporary fountain F and the lubricant oil is gradually discharged, so that the lubricant oil can be retained temporarily. As a result, the level of the lubricant oil in the gear housing 31 can be lowered temporarily.

### 3. 4. Structure of Gear Hosing 31 (Amount of Lubricant oil)

Since the gear housing 31 swings around the pivot shaft 25, the relative position between the bearings 75 and 76 and the level of the lubricant oil in the gear housing 31 changes in the gear hosing 31. According to the preferred embodiment, the positional relation is previously specified for each position of the gear hosing 31 in consideration of the relation between the ball bearing 75 and the needle bearing 76 that hold the pinion gear 45 and the oil level of the lubricant oil in the gear housing 31. The amount of the lubricant oil is set so that the previously specified relation is established for each position. Now, the specified positional relation will be described more specifically as conditions 1 and 2.

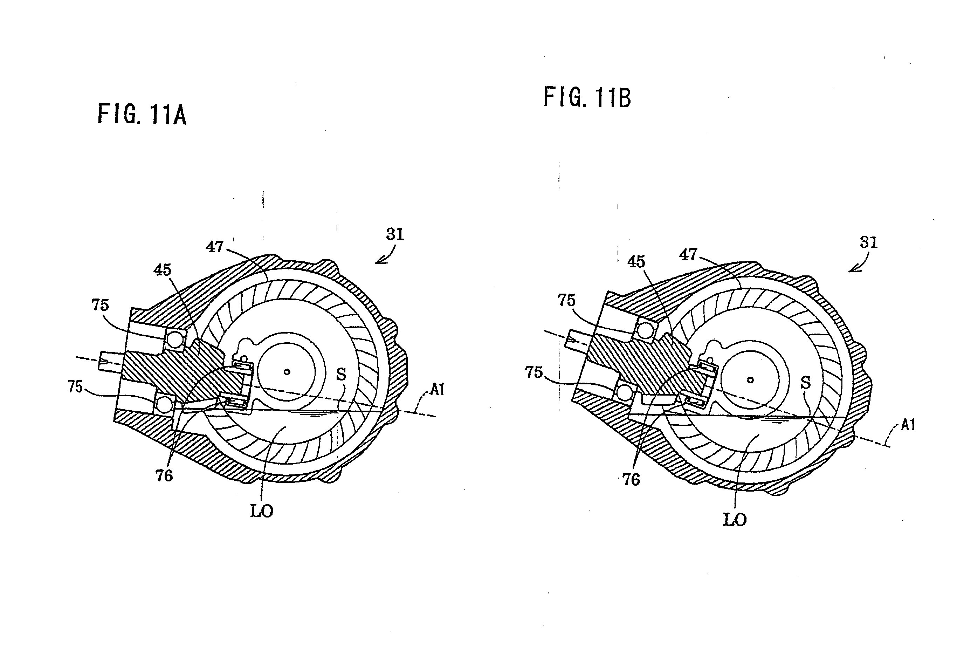

As shown in Fig. 11A, in the condition 1, "when the front wheel 21 and the rear wheel 11 are in contact with the ground surface, the ball bearing 75 and the needle bearing 76 are partly immersed in lubricant oil LO." Stated differently, the level S of the lubricant oil LO must be positioned above the lower end of each of the ball bearing 75 and the needle bearing 76 as the motorcycle 1 is upright without using the center stand 13. This condition 1 specifies the minimum amount of the lubricant oil LO in the gear housing 31.

As shown in Fig. 11B, in the condition 2, "when the rear wheel 11 is apart from the ground surface, the ball bearing 75 and the needle bearing 76 entirely emerge from the lubricant oil LO." Stated differently, when the rear wheel 11 is lifted off from the ground on the center stand 13, no part of both the ball bearing 75 and the needle bearing 76 is immersed in the lubricant oil LO. When the rear wheel 11 is lifted off on the center stand 13, the gear housing 31 rotates downward around the pivot shaft 25, and therefore the ball bearing 75 and the needle bearing 76 are in a relatively higher position than the level S. In the condition 2, the maximum amount of the lubricant oil LO in the gear housing 31 is specified.

The amount of the lubricant oil LO in the gear housing 31 is set to satisfy the conditions 1 and 2 described above.

### 4. Operation

Now, the operation of the motorcycle 1 according to the present preferred embodiment will be described.

### 4. 1. When Motorcycle Stops or is Parked

When the motorcycle 1 has the rear wheel 11 lifted off from the ground using the center stand 13, the lubricant oil LO is not supplied to the ball bearing 75 and the needle bearing 76 as shown in Fig. 11B. The lubricant oil LO is not retained in the temporary fountain F.

### 4. 2. When Motorcycle Starts Traveling

When the motorcycle 1 is started to travel, the center stand 13 is stored. Then, the front wheel 21 and the rear wheel 11 come into contact with the flat ground, and then the lubricant oil LO is supplied to at least a part of the ball bearing 75 and the needle bearing 76. In this way, in order to get the motorcycle 1 ready for traveling, the lubricant oil LO is always supplied to the ball bearing 75 and the needle bearing 76 before the vehicle is started.

### 4. 3. While Motorcycle Travels

When the motorcycle 1 travels, the swing arm 23 swings around the pivot shaft 25, so that the gear housing 31 swings in the vertical direction while changing its position. The change in the position of the gear housing 31 allows the lubricant oil LO in the gear housing 31 to flow and the level S of the lubricant oil LO is inclined. As a result, the lubricant oil LO is supplied to a wider range in the gear housing 31.

The ring gear 47 rotates in the gear housing 31. The lubricant oil LO is taken around with the ring gear 47. The lubricant oil LO thus taken around is drawn upward from the level S in the rotation direction G of the ring gear 47 mainly along the tooth surface 47a of the ring gear 47. The drawn up lubricant oil LO comes into the temporary fountain F from the inlets Fi at the various locations. The lubricant oil LO that has come into the fountain is discharged from the temporary fountain F through the outlets Fo. The inflow into the temporary fountain F exceeds the amount that can be discharged from the outlets Fo and therefore the lubricant oil LO temporarily remains in the temporary fountain F. As a result, the level S of the lubricant oil LO in the gear housing 31 is lower than the original level S corresponding to the oil amount of the lubricant oil LO in the gear housing 31.

When the level S of the lubricant oil LO is lowered, the capacity of the ring gear 47 in contact with the lubricant oil LO under the level S is reduced, and the resistance of the lubricant oil LO against the rotation of the ring gear 47 is reduced. Therefore, power transmission loss at the rear gear unit 43 is reduced.

The largest amount of heat is generated from the part where the pinion gear 45 and the ring gear 47 are engaged with each other in the gear housing 31. In addition, the lubricant oil LO is scattered by the rotation of the ring gear 47 and collides against various parts in the gear housing 31, so that the temperature of the lubricant oil LO is raised.

At the outer surface of the gear housing 31, traveling wind flows around the horizontal fins 83h and the vertical fins 83v in the direction from the front to the back of the motorcycle 1. Since the horizontal fins 83h and the vertical fins 83v are both substantially parallel to the front-back direction, and therefore the traveling wind flows along the surfaces of the horizontal fins 83h and the vertical fins 83v. Therefore, the heat of the horizontal fins 83h and the vertical fins 83v can be radiated efficiently to the outside air, so that the gear housing 31 and the lubricant oil Lo in the gear housing 31 can be cooled in an optimum manner.

The rear wheel 11 rotates around the axle shaft 33, so that swirling flow is generated around the axle shaft 33 in the in the periphery of the inner fins 85. The rear side fins 85 are parallel to the radial direction around the axle shaft 33 and therefore the swirling flow blows perpendicularly at the inner fins 85. In this way, heat exchange is efficiently carried out between the inner fins 85 and the outside air.

### 4. 4. After Motorcycle Stops

When the motorcycle 1 stops traveling and the engine 5 is stopped, the ring gear 47 stops rotating. In this way, the lubricant oil Lo stops to be brought up and no longer comes into the temporary fountain F. Therefore, the lubricant oil LO entirely flows downward through the outlets Fo with time. As a result, the level S of the lubricant oil LO in the gear housing 31 is returned to the height of the original level S corresponding to the amount of the lubricant oil LO.

### 5. Effects of Preferred Embodiment

The motorcycle 1 according to the present preferred embodiment includes the rear gear unit 43 in which the rotation axis A1 of the pinion gear 45 is offset downward from the rotation center P of the ring gear 47 and the swing arm 23 having the gear housing 31 that stores the rear gear unit 43 swing around the pivot shaft 25. Therefore, the gear housing 31 has its position changed and can naturally supply the lubricant oil LO in a wider range in the gear housing 31. As a result, as compared to when the housing gear 31 is translated in the vertical direction without the swinging of the gear housing 31, the amount of the lubricant oil LO in the gear housing 31 can surely be reduced.

According to the present preferred embodiment, the amount of the lubricant oil LO in the gear housing 31 is set so that the condition based on the positional relation between the ball bearing 75 and the needle bearing 76 and the level S of the lubricant oil LO in the gear housing 31 is satisfied. Therefore, the amount of the lubricant oil LO in the gear housing 31 can surely be reduced.

According to the present preferred embodiment, the oil sump 91 is provided and the temporary fountain F is formed in an upper position of the gear housing 31, so that the lubricant oil LO can be retained temporarily. In this way, when the ring gear 47 rotates, the level S of the lubricant oil LO can be further lowered when the ring gear 47 rotates.

The lubricant oil LO taken around with the ring gear 47 comes into the temporary fountain F by itself, so that no power is necessary to guide the lubricant oil LO into the temporary fountain F. As a result, the resistance the ring gear 47 receives from the lubricant oil LO during the rotation of the ring gear 47 is reduced, and the rear gear unit 43 can transmit power efficiently from the engine 5 to the rear wheel 11. In addition, the ring gear 47 reduces the amount of the lubricant oil LO to be scattered, so that the amount of heat generated by the collision of the lubricant oil LO can be reduced.

The fins (i.e., the outer fin 83 and the inner fins 85) are provided at the outer side of the gear housing 31, and therefore the gear housing 31 and the lubricant oil LO in the gear housing 31 can be cooled efficiently. In this way, when the amount of the lubricant oil LO in the gear housing 31 is reduced, the lubricant oil LO can be prevented from being degraded.

The outer fin 83 (the horizontal fins 83h and the vertical fins 83v) is provided in a position corresponding the part where the pinion gear 45 and the ring gear 47 are engaged with each other (i.e., where the outer surface of the gear housing 31 is at the highest temperature). Therefore, the outer fin 83 can cool the gear housing 31 effectively.

Since the horizontal fins 83h and the vertical fins 83v have shapes parallel to traveling wind, and therefore fresh outside air is always supplied around the horizontal fins 83h and the vertical fins 83v. Therefore, heat exchange can be carried out efficiently between the horizontal fins 83h and the vertical fins 83v and the outside air.

The inner fins 85 are provided radially to the axle shaft 33 coaxial with the center of the swirling flow of the rear wheel 11, and therefore the swirling flow blows against the inner fins 85 efficiently. Therefore, heat exchange can be carried out efficiently between the inner fins 85 and the outside air.

### 6. Other Embodiments

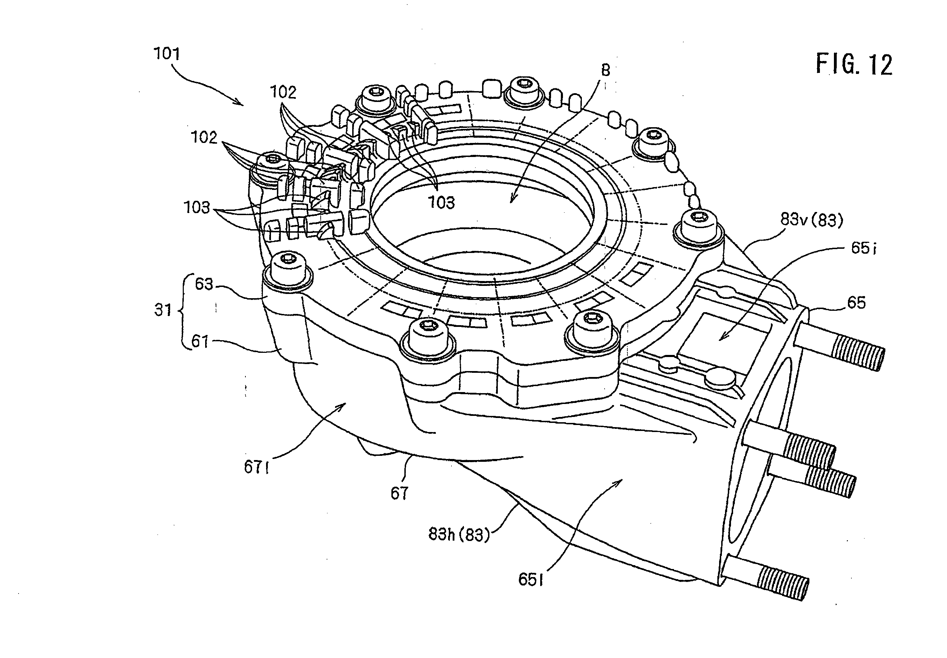

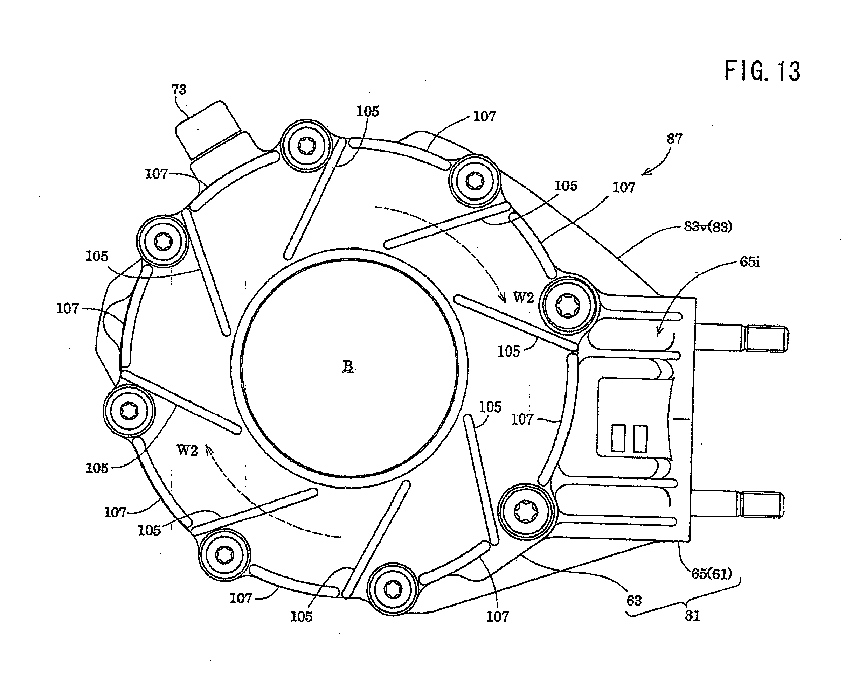

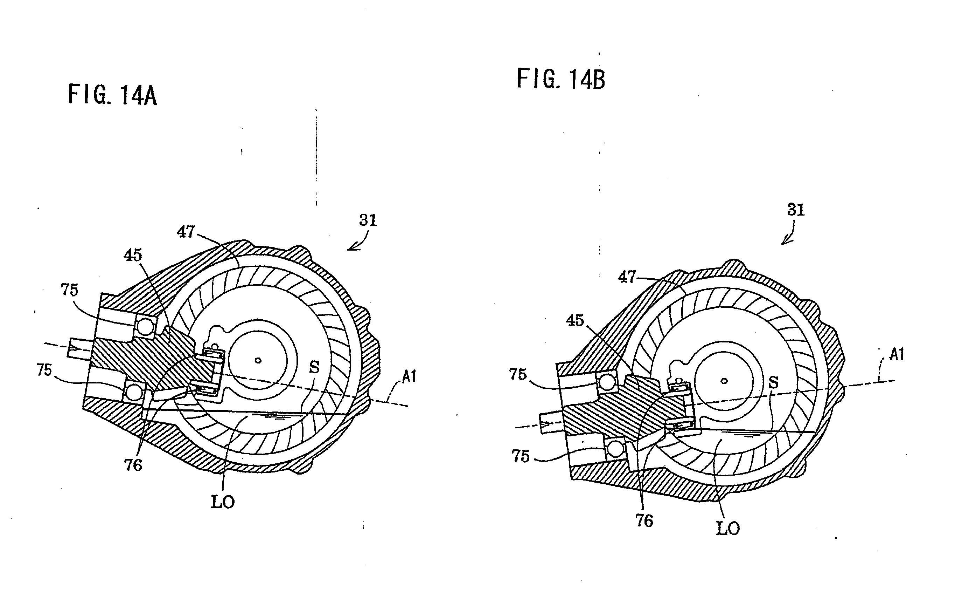

The present invention is not limited to the above-described preferred embodiment and can be modified as in the following.
(1) In the above-described preferred embodiment, the outer fin 83 is provided at the front side portion 65o and the upper portion 65u of the tubular portion 65 and the front side portion 67o and the upper portion 67u of the disk shaped portion 67, but the invention is not limited to this arrangement. More specifically, the outer fins 83 may be provided at any of the upper portion, the lower portion, and the front side portion of the gear housing 31. For example, the outer fin 83 may be provided at the lower portion 651 of the tubular portion 65 or the lower portion 671 of the disk shaped portion 67 shown in Fig. 5. The outer fin 83 may be provided only at the tubular portion 65 instead of providing them from the tubular portion 65 to the disk shaped portion 67.
   When the gear housing 31 does not have the tubular portion 65 or the disk shaped portion 67, the outer fins 83 may be provided at least at one of the upper portion, the lower portion, and the front side portion of the gear housing 31.
(2) In the above-described preferred embodiment, the horizontal fins 83h and the vertical fins 83v are both flat plate shaped, but the shape is not limited to this shape. More specifically, the outer fin 83 can be modified as required to have shapes that can receive traveling wind efficiently. For example, a curved shape may be employed.
(3) In the above-described preferred embodiment, the horizontal fins 83h and the vertical fins 83v are substantially parallel to the front-back direction x, but the invention is not limited to this arrangement. For example, when the rotation axis A1 of the pinion gear 45 or the axial center of the tubular portion 65 is not substantially parallel to the front-back direction x, the horizontal fins 83h and the vertical fins 83v may be changed so that these fins are substantially parallel to the rotation axis A1 of the pinion gear 45 or the axial center of the tubular portion 65. Alternatively, fins that are substantially nonparallel to any of the front-back direction x, the rotation axis A1 and the axial center of the tubular portion 65 may be employed as with the case when fins with curved surfaces are used as described above.
(4) In the above-described preferred embodiment, the horizontal fins 83h are arranged substantially parallel to one another, but the invention is not limited to this arrangement. For example, the horizontal fins 83h may be arranged radially. This also applies to the vertical fins 83v
(5) In the above-described preferred embodiment, the inner fins 85 are flat plate type elements that extend radially around the axle shaft 33, but the invention is not limited to this arrangement. Now, modifications of the inner fins will be described with reference to the drawings.
   Referring to Fig. 12, a inner fin 101 includes a plurality of raised portions 102 arranged apart from one another in the radial direction around the axle shaft 33. The inner fin 101 includes a plurality of raised portions 103 arranged apart from one another in the circumferential direction around the axle shaft 33. The inner fin 101 in this arrangement has an increased surface area in contact with swirling flow, so that heat exchange with the outside air can be carried out even more efficiently.
   Referring to Fig. 13, inner fins 105 are arranged radially around the axial shaft 33. However, the inner fins 105 are different from the inner fins 85 in that they not formed along the radius of the inner cover 63. The inner fins 105 in this arrangement guide swirling flow to the lateral side of the inner cover 63, so that heat exchange with the outside air can be carried out efficiently.
(6) In the above-described preferred embodiment, the entry preventing member 87 includes the plurality of claw pieces 89 arranged apart from one another, but the invention is not limited to this arrangement. For example, as shown in Fig. 13, the entry preventing member 87 may be formed by wall portions 107 that projects continuously along the circumference of the inner cover 63.
(7) In the above-described preferred embodiment, the entry preventing member 87 is formed only in a region on the upper side of the inner cover 63, the invention is not limited to this arrangement. For example, as shown in Fig. 13, the entry preventing member 87 (wall portions 107) may be provided along the entire circumference of the inner cover 63.
(8) In the above-described preferred embodiment, the oil sump 91 forms the temporary fountain F between itself and the inner wall of the gear housing 31, but the invention is not limited to this arrangement. For example, another member forming the bottom or side wall of the temporary fountain F may be provided in addition to the side wall plate 95 and the temporary fountain F may be formed without using the inner wall of the gear housing 31.
(9) In the above-described preferred embodiment, the side wall plate 95 that forms the temporary fountain F has a flat plate shape, but the invention is not limited to this arrangement. For example, the shape may be modified so that the rear end 95b of the side wall plate 95 is curved to be close to the tooth surface 47a of the ring gear 47. In this way, the inlet Fi can guide the lubricant oil LO actively into the temporary fountain F, and the lubricant oil LO can come into the temporary fountain F even more smoothly.
(10) In the above-described preferred embodiment, the outlet Fo of the temporary fountain F is an opening surrounded by the front end 95f of the side wall plate 95, and the linear rib member 93, but the invention is not limited to this arrangement. For example, an opening may be formed at least at one of the side wall plate 95, the annular rib member 93a and the linear rib member 93b as the outlet Fo of the temporary fountain F.
(11) In the above-described preferred embodiment, the amount of the lubricant oil LO in the gear housing 31 is set based on the conditions 1 and 2, but the invention is not limited to these conditions 1 and 2.
   As shown in Fig. 14A, in condition 3, "when the front wheel 21 and the rear wheel 11 are in contact with the ground surface, the ball bearing 75 and the needle bearing 76 entirely emerge from the lubricant oil LO." As shown in Fig. 14B, in condition 4, "when the gear housing 31 swings to a higher position than the position of the gear housing 31 while the front wheel 21 and the rear wheel 11 are in contact with the ground surface, the ball bearing 75 and the needle bearing 76 are partly immersed in the lubricant oil LO." The amount of the lubricant oil LO in the gear housing 31 may be set in order to satisfy these conditions 3 and 4.
   While the motorcycle 1 travels, the gear housing 31 swings and therefore the lubricant oil LO can be supplied to the ball bearing 75 and the needle bearing 76. When the state of the motorcycle 1 during traveling is considered, the ball bearing 75 and the needle bearing 76 can be supplied with the lubricant oil LO as required if the condition 4 is satisfied. Therefore, the amount of the lubricant oil LO can be more reduced by setting the amount of the lubricant oil LO to satisfy the condition 3 within the range that satisfies the condition 4.
(12) In the above-described preferred embodiment, the conditions for setting the amount of the lubricant oil LO are specified in consideration of the bearing 75 and the needle bearing 76 that hold the pinion gear 45, but the invention is not limited to this arrangement. For example, a condition may be specified in consideration of the pinion gear 45 or the ring gear 47 or of the bearing 78 and the needle bearing 79 that hold the ring gear 47.
(13) In the above-described preferred embodiment, the universal joint 41b is provided, but the invention is not limited to this arrangement. For example, the universal joint 41b may be replaced by a double Cardan joint or a constant velocity ball joint. The joint having velocity constancy can reduce fluctuations in the rotation of the rear wheel 11.
(14) In the above-described preferred embodiment, the rotation axis A1 of the pinion gear 45 is offset downward from the rotation center P of the ring gear 47. However, the structure of the oil sump 91 in the gear housing 31 can be applied not only to the rear gear unit 43 but also to various-gear potions. For example, the structure of the oil sump 91 may be applied to a gear portion in which the rotation axis A1 of the pinion gear 45 intersects the rotation center P of the ring gear 47. The structure of the oil sump 91 may be applied to a straight bevel gear or a spiral gear.
(15) In the above-described embodiment, the swing arm 23L stores the drive shaft 41c but the swing arm does not have to store the drive shaft 41c. The swing arm can have any shape as required as long as it does not interfere with the drive shaft 41c. In this case, the drive shaft 41c may be exposed to the outside.
(16) The preferred embodiments described above and the modifications described above in (1) to (15) may be replaced by or combined with other modifications in various different forms as required.

## Claims

1. A motorcycle (1), comprising:
a vehicle body frame (3) having a pivot shaft (25);
an engine (5) supported at the vehicle body frame;
a swing arm (23) provided swingably around the pivot shaft (25);
a rear wheel (11) provided rotatably at the swing arm;
a first drive shaft (41c);
a gear housing (31);
a pinion gear (45) stored in the gear housing and coupled coaxially with the rear end of the first drive shaft; and
a ring gear (47) stored in the gear housing and coupled coaxially with an axle shaft (33) of the rear wheel, the ring gear being engaged with the pinion gear,
a rotation axis (A1) of the pinion gear being offset downward from a rotation center (P) of the ring gear;
**characterized in that**
the gear housing (31) is provided integrally with the swing arm to swing around the pivot shaft together with the swing arm;
the first drive shaft (41c) is provided to swing around the pivot shaft together with the swing arm to transmit driving force to the rear wheel; and
the motorcycle further comprises a bearing (75, 76) provided at the gear housing to hold the pinion gear rotatably, wherein lubricant oil (LO) in the gear housing is filled so that the entire bearing emerges from the lubricant oil
when the motorcycle is lifted by a center stand (13) so that the rear wheel is lifted off from the ground surface, or
when the motorcycle is not traveling and the front wheel and the rear wheel of the motorcycle are both in contact with the ground surface.

2. The motorcycle according to claim 1, wherein the first drive shaft extends straight in the front-back direction of the motorcycle.

3. The motorcycle according to claim 1 or 2, further comprising:
a second drive shaft (41a);
a universal joint (41b) provided on the pivot shaft and coupled between the first drive shaft and the second drive shaft;
a driving bevel gear (39a) coupled coaxially with an output shaft (37) of the engine; and
a driven bevel gear (39b) coupled coaxially with the front end of the second drive shaft and engaged with the driving bevel gear,
a rotation axis (A2) of the driven bevel gear being provided at the same height as a rotation axis (A3) of the driving bevel gear.

4. The motorcycle according to any one of claims 1 to 3, further comprising a fin (83, 85) provided at an outer surface of the gear housing.

5. The motorcycle according to claim 4, wherein the fin is provided in a position corresponding to a part where the pinion gear and the ring gear are engaged with each other.

6. The motorcycle according to claim 4 or 5, wherein the fin comprises an outer fin (83) provided at any one of an upper portion of the gear housing, a lower portion of the gear housing, and a front side portion of the gear housing.

7. The motorcycle according to claim 6, wherein the outer fin is provided along the front-back direction of the motorcycle.

8. The motorcycle according to claim 6 or 7, wherein the gear housing comprises:
a tubular portion (65) extending along the front-back direction of the motorcycle and storing the pinion gear; and
a disk shaped portion (67) connected to a rear end of the tubular portion and storing the ring gear, and
the outer fin comprises a horizontal fin (83h) projecting horizontally from a front side portion of the tubular portion.

9. The motorcycle according to claim 8, wherein the outer fin further comprises a vertical fin (83v) extending vertically from an upper portion of the tubular portion.

10. The motorcycle according to claims 4 to 9, wherein the fin comprises an inner fin (85) provided at a rear side portion of the gear housing.

11. The motorcycle according to claim 10, wherein the inner fin is formed radially around the axle shaft of the rear wheel.

12. The motorcycle according to claim 10 or 11, further comprising an entry preventing member (87) provided on an upper side of the rear side portion to prevent a foreign substance from entering between the inner fins, and wherein the entry preventing member comprises a plurality of claw pieces (89) provided apart from one another along a circumference of the upper side.

13. The motorcycle according to any one of claims 1 to 12, wherein the gear housing comprises a temporary fountain (F) temporarily retaining lubricant oil taken around with the ring gear by a rotation of the ring gear.

14. The motorcycle according to claim 13, wherein the temporary fountain is positioned above the axle shaft of the rear wheel, and wherein the temporary fountain comprises an inlet (Fi) provided on an upstream side with respect to a rotation direction of the ring gear.

## Patentansprüche

1. Ein Motorrad (1), das folgende Merkmale aufweist:
einen Fahrzeugkörperrahmen (3) mit einer Schwenkwelle (25);
einen Motor (5), der an dem Fahrzeugkörperrahmen getragen wird;
einen Schwingarm (23), der schwingbar um die Schwenkwelle (25) bereitgestellt ist;
ein Hinterrad (11), das drehbar an dem Schwingarm bereitgestellt ist;
eine erste Antriebswelle (41 c);
ein Zahnradgehäuse (31);
ein Ritzelzahnrad (45), das in dem Zahnradgehäuse gelagert ist und koaxial mit dem Hinterende der ersten Antriebswelle gekoppelt ist; und
ein Hohlrad (47), das in dem Zahnradgehäuse gelagert ist und koaxial mit einer Achswelle (33) des Hinterrads gekoppelt ist, wobei das Hohlrad mit dem Ritzelzahnrad in Eingriff ist,
wobei eine Drehachse (A1) des Ritzelzahnrads abwärts von einem Rotationszentrum (P) des Hohlrades versetzt ist;
**dadurch gekennzeichnet, dass**
das Zahnradgehäuse (31) einstückig mit dem Schwingarm bereitgestellt ist, um zusammen mit dem Schwingarm um die Schwenkwelle zu schwingen;
wobei die erste Antriebswelle (41c) bereitgestellt ist, um zusammen mit dem Schwingarm um die Schwenkwelle zu schwingen, um eine Antriebskraft auf das Hinterrad zu übertragen; und
das Motorrad ferner ein Lager (75, 76) aufweist, das an dem Zahnradgehäuse bereitgestellt ist, um das Ritzelzahnrad drehbar zu halten, wobei Schmieröl (LO) so in das Zahnradgehäuse gefüllt ist, dass das gesamte Lager aus dem Schmieröl heraussteht,
wenn das Motorrad durch einen Mittelständer (13) gehoben ist, so dass das Hinterrad von der Bodenoberfläche abgehoben ist, oder
wenn das Motorrad sich nicht bewegt und das Vorderrad und das Hinterrad des Motorrads beide in Kontakt mit der Bodenoberfläche sind.

2. Das Motorrad gemäß Anspruch 1, bei dem sich die erste Antriebswelle gerade in der Vorwärts-Rückwärts-Richtung des Motorrads erstreckt.

3. Das Motorrad gemäß Anspruch 1 oder 2, das ferner folgende Merkmale aufweist:
eine zweite Antriebswelle (41 a);
ein Universalgelenk (41 b), das an der Schwenkwelle bereitgestellt ist und zwischen die erste Antriebswelle und die zweite Antriebswelle gekoppelt ist;
ein Antriebskegelrad (39a), das koaxial mit einer Abtriebswelle (37) des Motors gekoppelt ist;
ein getriebenes Kegelrad (39b), das koaxial mit dem Vorderende der zweiten Antriebswelle gekoppelt und in Eingriff mit dem Antriebskegelrad ist,
wobei eine Drehachse (A2) des getriebenen Kegelrads auf derselben Höhe bereitgestellt ist wie eine Drehachse (A3) des Antriebskegelrads.

4. Das Motorrad gemäß einem der Ansprüche 1 bis 3, das ferner eine Rippe (83, 85) aufweist, die an einer Außenoberfläche des Zahnradgehäuses bereitgestellt ist.

5. Das Motorrad gemäß Anspruch 4, bei dem die Rippe in einer Position bereitgestellt ist, die einem Teil entspricht, wo das Ritzelzahnrad und das Hohlrad in Eingriff miteinander sind.

6. Das Motorrad gemäß Anspruch 4 oder 5, bei dem die Rippe eine Außenrippe (83) aufweist, die entweder an einem oberen Abschnitt des Zahnradgehäuses, einem unteren Abschnitt des Zahnradgehäuses oder einem Vorderseitenabschnitt des Zahnradgehäuses bereitgestellt ist.

7. Das Motorrad gemäß Anspruch 6, bei dem die Außenrippe entlang der Vorwärts-Rückwärts-Richtung des Motorrads bereitgestellt ist.

8. Das Motorrad gemäß Anspruch 6 oder 7, bei dem das Zahnradgehäuse Folgendes aufweist:
einen röhrenförmigen Abschnitt (65), der sich entlang der Vorwärts-Rückwärts-Richtung des Motorrads erstreckt und das Ritzelzahnrad lagert; und
einen scheibenförmigen Abschnitt (67), der mit einem Hinterende des röhrenförmigen Abschnitts verbunden ist und das Hohlrad lagert, und
wobei die Außenrippe eine horizontale Rippe (83h) aufweist, die horizontal von einem Vorderseitenabschnitt des röhrenförmigen Abschnitts hervorsteht.

9. Das Motorrad gemäß Anspruch 8, bei dem die Außenrippe ferner eine vertikale Rippe (83v) aufweist, die sich vertikal von einem oberen Abschnitt des röhrenförmigen Abschnitts erstreckt.

10. Das Motorrad gemäß einem der Ansprüche 4 bis 9, bei dem die Rippe eine innere Rippe (85) aufweist, die an einem Rückseitenabschnitt des Zahnradgehäuses bereitgestellt ist.

11. Das Motorrad gemäß Anspruch 10, bei dem die innere Rippe radial um die Achswelle des Hinterrads gebildet ist.

12. Das Motorrad gemäß Anspruch 10 oder 11, das ferner ein Eintrittsverhinderungsbauglied (87) aufweist, das auf einer oberen Seite des Rückseitenabschnitts bereitgestellt ist, um zu verhindern, dass eine fremde Substanz zwischen die inneren Rippen eintritt, und wobei das Eintrittsverhinderungsbauglied eine Mehrzahl von Klauenstücken (89) aufweist, die entfernt voneinander entlang eines Umfangs der Oberseite bereitgestellt sind.

13. Das Motorrad gemäß einem der Ansprüche 1 bis 12, bei dem das Zahnradgehäuse einen temporären Behälter (F) aufweist, der Schmieröl enthält, das mit dem Hohlrad durch eine Drehung des Hohlrades mitgenommen wird.

14. Das Motorrad gemäß Anspruch 13, bei dem der temporäre Behälter über der Achswelle des Hinterrads positioniert ist, und bei dem der temporäre Behälter einen Einlass (Fi) aufweist, der auf einer Seite stromaufwärts im Hinblick auf eine Drehrichtung des Hohlrades bereitgestellt ist.

## Revendications

1. Motocyclette (1), comprenant:
un châssis de carrosserie de véhicule (3) présentant un arbre de pivotement (25);
un moteur (5) supporté sur le châssis de carrosserie de véhicule;
un bras oscillant (23) prévu de manière oscillante autour de l'arbre de pivotement (25);
une roue arrière (11) prévue de manière rotative sur le bras oscillant;
un premier arbre d'entraînement (41c);
un boîtier d'engrenages (31);
un engrenage à pignons (45) logé dans le boîtier d'engrenages et couplé coaxialement à l'extrémité arrière du premier arbre d'entraînement; et
une couronne dentée (47) logée dans le boîtier d'engrenages et couplée coaxialement à un arbre d'essieu (33) de la roue arrière, la couronne dentée étant en prise avec l'engrenage à pignons,
un axe de rotation (A1) de l'engrenage à pignons étant décalé vers le bas par rapport à un centre de rotation (P) de la couronne dentée;
**caractérisé par le fait que**
le boîtier d'engrenages (31) est prévu solidaire du bras oscillant de manière à pivoter autour de l'axe de pivotement ensemble avec le bras oscillant;
le premier arbre d'entraînement (41c) est prévu de manière à pivoter autour de l'axe de pivotement ensemble avec le bras oscillant pour transmettre la force d'entraînement à la roue arrière; et
la motocyclette comporte par ailleurs un roulement (75, 76) prévu au niveau du boîtier d'engrenages pour maintenir l'engrenage à pignons de manière rotative, où l'huile de lubrification (LO) dans le boîtier d'engrenages est remplie de sorte que tout le roulement émerge de l'huile de lubrification
lorsque le véhicule est soulevé par une béquille centrale (13) de sorte que la roue arrière soit soulevée par rapport à la surface du sol, ou
lorsque la motocyclette ne se déplace pas et que la roue avant et la roue arrière de la motocyclette sont toutes deux en contact avec la surface du sol.

2. Motocyclette selon la revendication 1, dans laquelle le premier arbre d'entraînement s'étend en ligne droite dans la direction avant-arrière de la motocyclette.

3. Motocyclette selon la revendication 1 ou 2, comprenant par ailleurs:
un deuxième arbre d'entraînement (41a);
un joint universel (41b) prévu sur l'arbre de pivotement et couplé entre le premier arbre d'entraînement et le deuxième arbre d'entraînement;
un engrenage conique d'entraînement (39a) couplé de manière coaxiale à un arbre de sortie (37) du moteur; et
un engrenage conique entraîné (39b) couplé de manière coaxiale à l'extrémité avant du deuxième arbre d'entraînement et en prise avec l'engrenage conique d'entraînement,
un axe de rotation (A2) de l'engrenage conique entraîné étant prévu à la même hauteur que l'axe de rotation (A3) de l'engrenage conique d'entraînement.

4. Motocyclette selon l'une quelconque des revendications 1 à 3, comprenant par ailleurs une ailette (83, 85) prévue sur une surface extérieure du boîtier d'engrenages.

5. Motocyclette selon la revendication 4, dans laquelle l'ailette est prévue en une position correspondant à une partie où l'engrenage à pignons et la couronne dentée sont en prise l'un avec l'autre.

6. Motocyclette selon la revendication 4 ou 5, dans laquelle l'ailette comporte une ailette extérieure (83) prévue à l'une quelconque parmi une partie supérieure du boîtier d'engrenages, une partie inférieure du boîtier d'engrenages et une partie latérale avant du boîtier d'engrenages.

7. Motocyclette selon la revendication 6, dans laquelle l'ailette extérieure est prévue le long de la direction avant-arrière de la motocyclette.

8. Motocyclette selon la revendication 6 ou 7, dans laquelle le boîtier d'engrenages comprend:
une partie tubulaire (65) s'étendant le long de la direction avant-arrière de la motocyclette et contenant l'engrenage à pignons; et
une partie en forme de disque (67) connecté à une extrémité arrière de la partie tubulaire et contenant la couronne dentée; et
l'ailette extérieure comprend une ailette horizontale (83h) ressortant horizontalement d'une partie latérale avant de la partie tubulaire.

9. Motocyclette selon la revendication 8, dans laquelle l'ailette extérieure comprend par ailleurs une ailette verticale (83v) s'étendant verticalement à partir d'une partie supérieure de la partie tubulaire.

10. Motocyclette selon les revendications 4 à 9, dans laquelle l'ailette comprend une ailette intérieure (85) prévue sur une partie latérale arrière du boîtier d'engrenages.

11. Motocyclette selon la revendication 10, dans laquelle l'ailette intérieure est formée radialement autour de l'arbre d'essieu de la roue arrière.

12. Motocyclette selon la revendication 10 ou 11, comprenant par ailleurs un élément empêchant l'entrée (87) prévu sur un côté supérieur de la partie latérale arrière, pour empêcher qu'une substance étrangère ne pénètre entre les ailettes intérieures, et dans laquelle élément empêchant l'entrée comprend une pluralité de pièces de griffe (89) prévues espacées l'une de l'autre le long d'une circonférence du côté supérieur.

13. Motocyclette selon l'une quelconque des revendications 1 à 12, dans laquelle le boîtier d'engrenages comprend une fontaine temporaire (F) retenant temporairement l'huile de lubrification prise autour de la couronne dentée par une rotation de la couronne dentée.

14. Motocyclette selon la revendication 13, dans laquelle la fontaine temporaire est positionnée au-dessus de l'arbre d'essieu de la roue arrière, et dans laquelle la fontaine temporaire comprend une entrée (Fi) prévue d'un côté amont par rapport à une direction de rotation de la couronne dentée.
